# EUROPÄISCHE PATENTSCHRIFT

(11) **EP 1 516 007 B1**
(45) Veröffentlichungstag und Bekanntmachung des Hinweises auf die Patenterteilung: **16.11.2005**
(21) Anmeldenummer: 03740194.0
(22) Anmeldetag: 06.06.2003
(51) Int. Cl.: C08G 65/26

(54) **VERFAHREN ZUR HERSTELLUNG VON POLYETHERALKOHOLEN**
METHOD FOR PRODUCING POLYETHER ALCOHOLS
PROCEDE DE PRODUCTION DE POLYETHER-ALCOOLS

(30) Priorität: 13.06.2002 DE 10226415
(43) Veröffentlichungstag der Anmeldung: 23.03.2005
(73) Patentinhaber: BASF Aktiengesellschaft, 67056 Ludwigshafen (DE)
(72) Erfinder: RUPPEL, Raimund, 01099 Dresden (DE); BAUM, Eva, 01987 Schwarzheide (DE); WINKLER, Jürgen, 01987 Schwarzheide (DE); BOHRES, Edward, 68161 Mannheim (DE)
(86) Internationale Anmeldenummer: PCT/EP2003/005936
(87) Internationale Veröffentlichungsnummer: WO 2003/106534

(56) Entgegenhaltungen:
- WO-A-92/00365
- WO-A-97/27236

## Beschreibung

Gegenstand der Erfindung sind Polyetheralkohole, ein verbessertes Verfahren zu ihrer Herstellung mittels DMC-Katalyse sowie ihre Verwendung, insbesondere zur Herstellung von Polyurethanen.

Polyurethane werden in großen Mengen hergestellt. Ihre Herstellung erfolgt üblicherweise durch Umsetzung von Polyisocyanaten mit Verbindungen mit mindestens zwei mit Isocyanatgruppen reaktiven Wasserstoffatomen, insbesondere Polyetheralkoholen und/oder Polyesteralkoholen.

Die Herstellung von Polyesteralkoholen erfolgt zumeist durch Umsetzung von mehrfunktionellen Alkoholen mit mehrfunktionellen Carbonsäuren.

Die Herstellung von Polyetheralkoholen erfolgt zumeist durch katalytische Anlagerung von Alkylenoxiden an H-funktionelle Startsubstanzen, insbesondere Alkohole und/oder Amine. Als Katalysatoren werden in der Technik zumeist alkalische Substanzen, vorzugsweise Alkalimetallhydroxide, eingesetzt, wobei das Kaliumhydroxid die größte technische Bedeutung hat.

Neuerdings gewinnen Multimetallcyanidkatalysatoren, häufig auch als DMC-Katalysatoren bezeichnet, an Bedeutung. Die Vorteile der DMC-Katalysatoren liegen zum einen darin, dass die Anlagerung der Alkylenoxide mit einer höheren Reaktionsgeschwindigkeit abläuft, zum anderen zeichnen sich die so hergestellten Polyetheralkohole durch einen geringeren Gehalt an ungesättigten Anteilen in der Polyetherkette aus. Die DMC-Katalysatoren können besonders vorteilhaft bei der Herstellung von Polyetheralkoholen mit hohem Molekulargewicht und niedriger Funktionalität, wie sie insbesondere zur Herstellung von Polyurethan-Weichschaumstoffen eingesetzt werden, angewendet. Zur Herstellung von Polyurethan-Hartschaumstoffen werden zumeist Polyetheralkohole mit einer hohen Funktionalität, insbesondere solche mit einer Funktionalität von mindestens 4, eingesetzt. Die zur Herstellung derartiger Polyetheralkohole verwendeten Startsubstanzen sind zumeist fest. Derartige feste Startsubstanzen konnten bisher noch nicht mittels DMC-Katalysatoren mit Alkylenoxiden umgesetzt werden.

Ein weiterer Nachteil bei der Verwendung von DMC-Katalysatoren ist das schwierige Anspringverhalten beim Reaktionsstart. So ist es sehr schwierig, niedermolekulare Alkohole, wie Glycerin, unter Verwendung von DMC-Katalysatoren mit Alkylenoxiden umzusetzen. Zumeist werden die niedermolekularen Alkohole zunächst unter Verwendung anderer Katalysatoren mit Alkylenoxiden zu einem Zwischenprodukt umgesetzt, dieses, falls nötig, gereinigt und dann unter Verwendung von DMC-Katalysatoren mit weiterem Alkylenoxid zum gewünschten Polyetheralkohol umgesetzt. Das am weitesten verbreitete Verfahren zur Herstellung von Polyetheralkoholen wie auch von als Starterverbindungen für die DMC-Katalyse geeigneten Zwischenprodukten besteht in der mit Kaliumhydroxid katalysierten Anlagerung von Alkylenoxiden an die genannten niedermolekularen Starteralkohole mit anschließender Neutralisation sowie Entfernung der dabei gebildeten Kaliumsalze z.B. durch Filtration. Sollen die auf diese Weise hergestellten Zwischenprodukte als Startverbindungen für die DMC-katalysierte Anlagerung von weiterem Alkylenoxid verwendet werden, müssen die Polyetherole zur nahezu restlosen Entfernung der Kaliumsalze wie auch der anderen alkalischen Bestandteile sehr sorgfältig und eventuell in einem weiteren Verfahrensschritt nachbereitet werden, wobei ein zu starkes Anreichern von H⁺-Ionen ebenfalls nachteilig und somit zu vermeiden ist. Dieses Vorgehen ist sehr aufwendig und wirkt sich daher nachteilig auf die Wirtschaftlichkeit des Verfahrens aus.

Sollen weiterhin in ein und derselben Produktionsanlage mittels Alkalihydroxiden und DMC-Katalysatoren katalysierte Polyetheralkohole hergestellt werden, sind in der Regel zwischen einer Umstellung von KOH auf DMC aufwendige Spülprozesse notwendig, wobei nicht sichergestellt werden kann, dass die nachfolgenden DMC-katalysierten Prozesse störungsfrei ablaufen und qualitätsgerechtes Produkt liefern. Neben den zusätzlichen wirtschaftlichen Nachteilen kann dieser Umstand auch zu einem sicherheitstechnischen Problem werden, da so undefinierte Reaktionszustände mit akkumuliertem Alkylenoxid entstehen könnten.

Aufgabe der vorliegenden Erfindung war es demnach, ein Verfahren zur Herstellung von Polyetheralkoholen bereitzustellen, die durch Anlagerung von Alkylenoxiden an H-funktionelle Startsubstanzen mittels DMC-Katalysatoren hergestellt werden können, wobei sowohl die Startsubstanzen, an die mittels DMC-Katalysatoren Alkylenoxide angelagert werden, auf einfache und reproduzierbare Weise erzeugt sowie die Möglichkeit sichergestellt werden sollte, ohne dass aufwendige Reinigungsschritte zwischen Herstellung von Polyetheralkoholen mittels alkalischer und DMC-Katalysatoren in der gleichen Produktionsanlage notwendig sind.

Die Aufgabe konnte überraschenderweise dadurch gelöst werden, dass bei der Herstellung der Starterverbindung für die mittels DMC katalysierte Anlagerung von Alkylenoxiden als Natriumhydroxid als Katalysator eingesetzt wird.

Gegenstand der Erfindung ist demzufolge ein Verfahren zur Herstellung von Polyetheralkoholen, umfassend die Schritte
a) Umsetzung eines niedermolekularen Alkohols mit Alkylenoxid in Anwesenheit eines basischen Katalysators zu einem Alkylenoxid-Anlagerungsprodukt mit einem Molekulargewicht im Bereich zwischen 200 und 900 g/mol,
b) Abtrennung des basischen Katalysators von dem Produkt aus Schritt a)
c) Umsetzung des Produkts aus Schritt b) mit weiterem Alkylenoxid zur Herstellung des gewünschten Endprodukts unter Verwendung mindestens eines DMC-Katalysators,
wobei als basischer Katalysator in Schritt a) Natriumhydroxid eingesetzt wird, und das Produkt aus Schnitt b) ein Gehalt am Natriumionen von 5-30 ppm aufweist.

Als niedermolekulare Alkohole werden in Verfahrensschritt a) insbesondere Alkohole mit 2 bis 8 Hydroxylgruppen, vorzugsweise aliphatische und cyclo-aliphatische Alkohole mit 2 bis 8 Kohlenstoffatomen in der verzweigten oder unverzweigten Alkylkette oder im cyclo-aliphatischen Gerüst eingesetzt. Insbesondere werden die mehrfunktionellen Alkohole ausgewählt aus der Gruppe, enthaltend Glycerin, Trimethylolpropan, Pentaerythrit, Di- und Tripentaerythrit, Sorbit, Saccharose, Ethylenglykol und seine Homologen, insbesondere Ethylenglykol und/oder Diethylenglykol, Propylenglykol und seine höheren Homologen, insbesondere Propylenglykol und/oder Dipropylenglykol, 1,3-Propandiol, 1,2-, 1,3-, 2,3- und 1,4-Butandiol, Pentan- und Hexandiole, insbesondere 1,5-Pentandiol und 1,6-Hexandiol.

Weitere mögliche Einsatzstoffe für Verfahrensschritt a) sind hydrolysierte Stärke, Glukosesirup, Ethanol, Propanole, Hydroxycarbonsäuren, Hydroxyaldehyde und -ketone, solange im Molekül keine funktionellen Gruppen vorhanden sind, die durch das Natriumhydroxid angegriffen werden, beispielsweise Estergruppen, oder die den nachfolgenden DMC-katalysierten Anlagerungsschritt störend beeinflussen, beispielsweise Aminogruppen.

Vorzugsweise wird Schritt a) so ausgestaltet, dass der Polymerisationsgrad so klein wie möglich bleibt, um die Effektivität der nachfolgenden DMC-katalysierten Anlagerung optimal auszunutzen. Das Endprodukt aus Schritt a) sollte demzufolge je nach Funktionalität und verwendetem Starteralkohol ein möglichst niedriges mittleres Molekulargewicht aufweisen. Vorzugsweise wird der Schritt a) bis zu einem Molekulargewicht des Produkts im Bereich zwischen 200 und 1500, vorzugsweise zwischen 200 und 900 g/mol, durchgeführt.

Die Menge des in Schritt a) eingesetzten Natriumhydroxids liegt vorzugsweise in einem Bereich zwischen 0,05 und 2, vorzugsweise zwischen 0,1 und 1 Gew.-%, bezogen auf die Menge des in Schritt a) hergestellten Zwischenproduktes.

Die Reaktion in Verfahrensschritt a) kann bei den für die Herstellung von Polyetheralkoholen üblichen Bedingungen ablaufen, wie sie beispielsweise im Kunststoff-Handbuch, Band 7 "Polyurethane", herausgegeben von Günter Oertel, Carl-Hanser-Verlag München Wien 1993, Seite 63 bis 65, beschrieben sind.

Die Umsetzung der niedermolekularen Alkohole mit den Alkylenoxiden in Schritt a) findet vorzugsweise bei Drücken im Bereich von 1 bis 20, insbesondere zwischen 2 bis 10 bar und Temperaturen im Bereich von 60 bis 150°C, insbesondere zwischen 80 bis 130°C statt. Weiterhin bevorzugt wird die Herstellung unter Schutzgasatmosphäre, insbesondere unter Stickstoff- und/oder Argonatmosphäre durchgeführt.

Als Alkylenoxide können beispielsweise Ethylenoxid, Propylenoxid, Butylenoxid, Isobutylenoxid,1,2- sowie deren beliebige Mischungen untereinander, eingesetzt werden. Vorzugsweise eingesetzt werden Ethylenoxid, Propylenoxid sowie Mischungen daraus.

Die Alkylenoxide können in Schritt a) einzeln in Form von sogenannten Blöcken und bei Verwendung von mehr als zwei verschiedenen Alkylenoxiden in jedem beliebigen Mischungsverhältnis als Mischblöcke angelagert werden. Darüber hinaus kann das Mischungsverhältnis der Alkylenoxide während der Dosierung sowohl diskontinuierlich als auch kontinuierlich während der Synthese variiert werden.

Nach Beendigung der Zugabe der Alkylenoxide schließt sich zumeist eine Nachreaktionsphase an, um eine vollständige Umsetzung der Alkylenoxide zu erreichen. Danach erfolgt üblicherweise die Aufarbeitung des Produkts aus Schritt a). Dabei können Nebenverbindungen, wie nicht umgesetzte Monomere, leicht flüchtige Verbindungen und Nebenverbindungen nach verschiedenen, dem Fachmann bekannten Methoden, entfernt werden, wie beispielsweise durch Destillation, Aufarbeitung mittels eines Dünnschichtverdampfers, Stickstoff- und/oder Wasserdampfstripping.

Das Zwischenprodukt aus Verfahrensschritt a) wird zur Katalysatorentfernung in Schritt b) gemäß der üblichen, dem Fachmann bekannten Technologien mit Wasser und einem Neutralisierungsmittel behandelt, vorzugsweise kommen hier Säuren, insbesondere Phosphorsäure, aber auch Kohlendioxid oder saure Ionentauscher, beispielsweise Ambosol®, zum Einsatz. Der Neutralisation schließt sich meist eine Entfernung der gebildeten Natriumsalze beziehungsweise des Ionenaustauschers an, wobei die üblichen, dem Fachmann bekannten Technologien, wie Filtration oder Zentrifugation, zum Einsatz kommen.

Die Neutralisation kann gegebenenfalls im gleichen wie in Schritt a) benutzten Reaktorsystem erfolgen, was die nachfolgende Reinigung zur Durchführung der Anlagerung der Alkylenoxide in Schritt c) weiter vereinfacht.

Überraschenderweise muss die Abtrennung des basischen Katalysators in Schritt b) nicht bis zu so geringen Gehalten erfolgen wie bei der üblichen Verwendung von Kaliumhydroxid, wo eine Abtrennung bis zu einem Restgehalt an Kaliumionen von kleiner 5 ppm, vorzugsweise kleiner 3 ppm zwingend erforderlich ist.

Das aufbereitete Zwischenprodukt aus Schritt b) besitzt eine Restalkalität zwischen 5 und 30 ppm, gemessen mittels Titration. Bei einer Alkalität in diesem Bereich, die auf Kaliumionen zurückzuführen ist, würde die Umsetzung mit Alkylenoxiden unter Verwendung von DMC-Katalysatoren nur unter Schwierigkeiten, beispielsweise mit einer langen Induktionsperiode oder unter Einsatz erhöhter Mengen an DMC-Katalysator, ablaufen.

Eine weitergehende Entfernung der Natriumsalze, beispielsweise auf einen Gehalt kleiner 5 ppm, ist nicht erforderlich. In jedem Falle gilt jedoch, dass bei einer Verwendung von Kaliumhydroxid als Katalysator die Abreicherung auf geringere Restgehalte erforderlich wäre.

Dadurch kann der Schritt b) deutlich einfacher ablaufen. Dies ist insbesondere bei der Verwendung von hochviskosen oder festen Startsubstanzen vorteilhaft, da die Zwischenprodukte aus Verfahrensschritt a) bei derartigen Verbindungen zumeist eine relativ hohe Viskosität aufweisen und daher schwierig zu filtrieren sind.

Ein weiterer Vorteil des erfindungsgemäßen Verfahrens liegt in der möglichen Vereinfachung der Verfahrensführung. Soll unmittelbar im Anschluss an Schritt b) im gleichen Reaktorsystem die Anlagerung von weiterem Alkylenoxid mit einem DMC-Katalysator nach Schritt c) erfolgen, so genügt beim erfindungsgemäßen Verfahren im allgemeinen eine ein- bis zweifache Reinigung des Reaktors unter Verwendung von Wasser. Falls in Schritt a) Kaliumhydroxid anstelle von Natriumhydroxid verwendet würde, wären in der Regel mehrere Spülvorgänge mit Wasser sowie gegebenenfalls mehrere Testsynthesen unter Einsatz der DMC-Katalyse mit häufig nicht reproduzierbarem Anspringverhalten und unerwünschten Produkteigenschaften, beispielsweise einer hohen Viskosität oder einer breiten Molekulargewichtsverteilung, erforderlich.

Zur Durchführung von Schritt c) wird das nach Schritt b) vorliegende Produkt, das, wie beschrieben, ein Molekulargewicht im Bereich zwischen 200 und 900 g/mol, und eine Hydroxylzahl im Bereich zwischen 150 und 800 mg KOH/g aufweist, mit DMC-Katalysator versetzt und danach mit Alkylenoxiden zum fertigen Polyetheralkohol umgesetzt. In der Regel werden 10 bis 500 ppm DMC-Katalysator, bevorzugt 15 bis 200 ppm DMC-Katalysator, besonders bevorzugt 25 bis 150 ppm DMC-Katalysator, jeweils bezogen auf die Masse des zu erwartenden Endproduktes, verwendet. Überraschenderweise treten auch bei geringen Mengen an Katalysator kein Einbußen an Aktivität auf.

Der DMC-Katalysator kann als Pulver oder in Form einer Suspension, vorzugsweise in einem Polyol, wie beispielsweise in EP 090 444 beschrieben, eingesetzt werden.

Die Herstellung der erfindungsgemäßen Polyetheralkohole erfolgt, wie oben dargelegt, durch Anlagerung von Alkylenoxiden an die Polyetheralkohole aus Schritt b) unter Verwendung von Multimetallcyanid-Katalysatoren gemäß Schritt c).

Als Alkylenoxide können beispielsweise Ethylenoxid, 1,2-Propylenoxid, 1,2-Butylenoxid, 1,2-Isobutylenoxid sowie deren beliebige Mischungen untereinander, eingesetzt werden. Vorzugsweise eingesetzt werden Ethylenoxid und 1,2-Propylenoxid sowie Mischungen daraus.

Die Alkylenoxide können auch in Schritt c) einzeln in Form von sogenannten Blöcken und bei Verwendung von mehr als zwei verschiedenen Alkylenoxiden in jedem beliebigen Mischungsverhältnis als Mischblöcke angelagert werden. Darüber hinaus kann das Mischungsverhältnis der Alkylenoxide während der Dosierung sowohl diskontinuierlich als auch kontinuierlich während der Synthese variiert werden. Gegebenenfalls kann nach erfolgter Aktivierung der Startmischung in Verfahrensschritt c) weiterer Alkohol, entweder der gleiche wie in Schritt a) verwendet oder ein anderer gemeinsam mit dem Alkylenoxid zudosiert werden, wie dies beispielsweise in DD 203734 oder EP 879 259 beschrieben ist.

Der Aufbau der Polyetherkette richtet sich nach dem Verwendungszweck der Polyetheralkohole. So ist es bevorzugt, bei Polyetheralkoholen, die für Polyurethan-Blockweichschaumstoffe eingesetzt werden sollen, am Kettenende einen Block anzulagern, der im wesentlichen, vorzugsweise vollständig, aus Propylenoxid besteht. Bei Polyetheralkoholen, die für Polyurethan-Formweichschaumstoffe eingesetzt werden, ist es bevorzugt, am Kettenende einen Block anzulagern, der im wesentlichen, insbesondere vollständig, aus Ethylenoxid besteht. Dieser Block kann durch Dosierung von reinem Ethylenoxid angelagert werden.

In einer bevorzugten Ausführungsform des erfindungsgemäßen Verfahrens kann die Dosierung der Alkylenoxide so ausgestaltet sein, dass sich das Verhältnis der Alkylenoxide im Gemisch im Verlaufe der Dosierung ändert. So kann ein Endblock aus Ethylenoxid-Einheiten angelagert werden, indem bei der Dosierung eines Gemisches aus Ethylenoxid und Propylenoxid der Gehalt an Propylenoxid im Gemisch solange vermindert wird, bis am Ende nur noch reines Ethylenoxid angelagert wird. Diese Art der Dosierung ist in WO 01/44347 beschrieben.

Eine weitere Möglichkeit der Anlagerung der Alkylenoxide in Schritt c) ist in WO 99/51661 beschrieben. Dazu wird zur Verringerung des Gehalts an sehr hochmolekularen Bestandteilen nicht mehr als 5 % des Propylenoxids in Abwesenheit von Ethylenoxid angelagert.

Als Multimetallcyanidkatalysatoren werden zumeist solche der allgemeinen Formel (I) eingesetzt,

M¹ ₐ[M²(cN)_{b}(A)_{c}]_{d ·} fM¹gXₙ · h(H₂O) · eL (I),

wobei
- M1: ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
- M2: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M1 und M2 gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole, Aldehyde, Ketone, Ether, Polyether Ester, Harnstoffe, Amide, Nitrile, und Sulfide,
bedeuten, sowie
- a, b, c, d, g und n: so ausgewählt sind, dass die Elektroneutralität der Verbindung gewährleistet ist, und
- e: die Koordinationszahl des Liganden, oder null
- f: eine gebrochene oder ganze Zahl größer oder gleich 0
- h: eine gebrochene oder ganze Zahl größer oder gleich 0 bedeuten.

Derartige Verbindungen sind allgemein bekannt. Ihre Herstellung erfolgt nach bekannten Verfahren, wie beispielsweise in EP 862 947 beschrieben, indem man die wässrige Lösung eines wasserlöslichen Metallsalzes mit der wässrigen Lösung einer Hexacyanometallatverbindung, insbesondere eines Salzes oder einer Säure, vereinigt und dazu, soweit erforderlich, während oder nach der Vereinigung einen wasserlöslichen Liganden gibt.

Zur Herstellung der erfindungsgemäßen Polyetheralkohole werden die Verbindungen aus Schritt b) zunächst mit dem DMC-Katalysator vermischt und zu dieser Mischung das Alkylenoxid beziehungsweise die Mischung der Alkylenoxide dosiert. Gegebenenfalls können der Reaktionsmischung Lösemittel, wie beispielsweise Toluol, Xylol, Tetrahydrofuran, Aceton, 2-Methylpentanon, Cyclohexanon oder andere zugesetzt werden.

Überraschenderweise springt die Umsetzung der Reaktionsprodukte aus Schritt b) mit den Alkylenoxiden in Beisein der Multimetallcyanidkatalysatoren ohne Probleme reproduzierbar und ohne das Auftreten einer längeren Induktionsperiode an.

Die Reaktion verläuft auch bei höheren Molekulargewichten ohne unerwünschten Viskositätsanstieg ab, was auf eine verringerte Bildung der unerwünschten sehr hochmolekulare Anteile im Polyetheralkohol schließen lässt.

Schritt c) wird vorzugsweise bei Drücken im Bereich von 1 bis 20, insbesondere zwischen 2 bis 10 bar und Temperaturen im Bereich von 60 bis 150°C, insbesondere zwischen 80 bis 130°C durchgeführt. Weiterhin erfolgt die Umsetzung aus Sicherheitsgründen zumeist unter einer Schutzgasatmosphäre, insbesondere einer Stickstoff- und/oder Argonatmosphäre. Nach Beendigung der Alkylenoxidzugabe schließt sich zumeist eine Nachreaktionsphase an, um eine vollständige Umsetzung der Alkylenoxide zu erreichen. Danach erfolgt die Aufarbeitung der Polyetherole. Nebenverbindungen, wie nicht umgesetzte Monomere, leicht flüchtige Verbindungen und Nebenverbindungen können nach verschiedenen, dem Fachmann bekannten Methoden, entfernt werden, wie beispielsweise durch Destillation, Aufarbeitung mittels eines Dünnschichtverdampfers, Stickstoff- und/oder Wasserdampfstripping.

Gegebenenfalls können Schwebstoffe und Feststoffe durch verschiedene, dem Fachmann bekannten Methoden, wie beispielsweise Zentrifugieren oder Filtration, aus dem Reaktionsgemisch entfernt werden.

Der DMC-Katalysator kann nach der Herstellung prinzipiell im Polyetheralkohol verbleiben. Falls für bestimmte Einsatzzwecke erforderlich, kann er auch abgereichert oder ganz entfernt werden, beispielsweise mittels Filtration. Nach der Herstellung werden den Polyetheralkoholen üblicherweise Zusatzstoffe, wie Antioxidantien oder Stabilisatoren; zugesetzt.

Die erfindungsgemäßen Polyetheralkohole haben vorzugsweise eine durchschnittliche Funktionalität von mindestens 2; vorzugsweise im Bereich von 2 bis 8, insbesondere von 2 bis 5, eine Hydroxylzahl im Bereich zwischen 20 und 600 mg KOH/g und eine Viskosität, ermittelt nach DIN 53 015 bei 255C im Bereich zwischen 50 und 5000 mPas.

Die erfindungsgemäßen Polyetheralkohole können vorzugsweise zur Herstellung von Polyurethanen verwendet werden. Die Herstellung der Polyurethane erfolgt nach an sich bekannten Verfahren durch Umsetzung der Polyole e) mit Polyisocyanaten d). Je nach den angestrebten Eigenschaften der Polyurethane ist es möglich, die erfindungsgemäßen Polyetheralkohole allein oder gemeinsam mit anderen Verbindungen mit mindestens zwei mit Isocyanatgruppen reaktiven Wasserstoffatomen einzusetzen. Als Verbindungen mit mindestens zwei mit Isocyanatgruppen reaktiven Wasserstoffatomen, die gemeinsam mit den erfindungsgemäßen Polyetheralkoholen mit Polyisocyanaten eingesetzt werden können, gehören die Polyetheralkohole, Polyesteralkohole, sowie gegebenenfalls zwei- oder mehrfunktionelle Alkohole und Amine mit einem Molekulargewicht im Bereich zwischen 62 und 1000 g/mol, sogenannte Kettenverlängerer und Vernetzer. Weiterhin können Katalysatoren, Treibmittel, sowie die üblichen Hilfsmittel und/oder Zusatzstoffe eingesetzt werden.

Wie bereits beschrieben, können nach dem erfindungsgemäßen Verfahren besonders vorteilhaft Polyetheralkohole auf Basis von festen oder hochviskosen Startern hergestellt werden, deren Herstellung mittels DMC-Katalyse bisher schwierig war. Ein weiterer Vorteil des erfindungsgemäßen Verfahrens besteht in der einfachen Aufarbeitung des Vorpolymers, das mittels DMC-Katalyse zum Polyetheralkohol umgesetzt wird.

Derartige Verbindungen sowie Verfahren zur Herstellung der Polyurethane werden beispielsweise im Kunststoff-Handbuch, Band VII, "Polyurethane" 3. Auflage 1993 herausgegeben von Dr. G. Oertel (Carl-Hanser-Verlag, München) beschrieben.

Die nach dem erfindungsgemäßen Verfahren hergestellten Polyetheralkohole können beispielsweise zur Herstellung von PolyurethanSchaumstoffen, Vergussmassen, Coatings oder als Vernetzer verwendet werden.

Die Erfindung soll an den nachstehenden Beispielen näher erläutert werden.

### Beispiel 1: Herstellung der Starterverbindung mit Natriumhydroxid als Katalysator

In einem gereinigten und getrockneten 20-L-Rührkesselreaktor wurden unter Rühren 2730 g Glycerin mit 45 g festem Natriumhydroxid versetzt und auf 120°C erhitzt. Bei dieser Temperatur wurde anschließend das gebildete Reaktionswasser bei einem Vakuum von ca. 40 mbar abdestilliert, bis ein Wassergehalt von < 0,1 % erreicht war. Nach der Zugabe von 630 g Ethylenglykol wurden 16670 g Propylenoxid in einem Zeitraum von ca. 5 Stunden zudosiert. Nach Beendigung der Zugabe wurde eine Nachreaktionsphase bis zum Erreichen eines konstanten Druckes eingehalten. Danach wurden flüchtige Bestandteile aus dem Reaktionsgemisch abdestilliert.
Der Reaktorinhalt wurde anschließend mit 1000 g Wasser und 123 g 85-%iger Phosphorsäure versetzt, 60 min bei 90°C gerührt und nachfolgend bei 15 mbar bis zu einem Wassergehalt von 0,05 % destilliert. Das Produkt wurde aus dem Reaktor abgelassen und über einen Seitz-Tiefenfilter T 500 filtriert.
Der erhaltene, farblose Polyetheralkohol besaß folgende Kennwerte: OH-Zahl 306 mg KOH/g, Säurezahl 0,102 mg KOH/g, Wassergehalt 0,077 %, Viskosität (25°C) 215 mPas, Alkalität 6,1 ppm K.

Nach dem Ablassen des Produktes wurde der Reaktor zweimal mit Wasser gespült und getrocknet und in diesem Zustand für nachfolgende Synthesen verwendet.

### Beispiel 2: Herstellung des Polyetheralkohols mit DMC-Katalyse

3200 g des Zwischenproduktes aus Beispiel 1 wurden im gleichen 20-L-Rührkesselreaktor mit 44 g einer 4,53%-igen DMC-Katalysatorsuspension aus einem DMC-Katalysator hergestellt nach Beispiel 1 in EP 862 947, dies entspricht 100 ppm DMC-Katalysator, bezogen auf das herzustellende Produkt, versetzt und bei 120°C und einem Vakuum von ca. 40 mbar entwässert, bis der Wassergehalt unter 0,02 % lag. Anschließend wurden ca. 400 g Propylenoxid zudosiert und das Anspringen der Reaktion abgewartet, was an einer kurzzeitigen Temperaturerhöhung und einem schnellen Abfallen des Reaktordruckes erkennbar war. Nachfolgend wurden bei gleicher Temperatur 16450 g eines Gemisches aus 14910 g Propylenoxid und 1940 g Ethylenoxid in einem Zeitraum von ca. 2,5 Stunden zudosiert. Nach Erreichen eines konstanten Reaktordruckes wurden nicht umgesetzte Monomere und andere flüchtige Bestandteile im Vakuum abdestilliert und das Produkt abgelassen.
Der erhaltene, farblose Polyetheralkohol besaß folgende Kennwerte: OH-Zahl 49,4 mg KOH/g, Säurezahl 0,033 mg KOH/g, Wassergehalt 0,011 %, Viskosität (25°C) 543 mPas, M_{w} 3025 g/mol, D 1,381.

## Patentansprüche

1. Verfahren zur Herstellung von Polyetheralkoholen, umfassend die Schritte
a) Umsetzung eines niedermolekularen Alkohols mit Alkylenoxid in Anwesenheit eines basischen Katalysators zu einem Alkylenoxid-Anlagerungsprodukt mit einem Molekulargewicht im Bereich zwischen 200 und 900 g/mol,
b) Abtrennung des basischen Katalysators von dem Produkt aus Schritt a)
c) Umsetzung des Produkts aus Schritt b mit weiterem Alkylenoxid zur Herstellung des gewünschten Endprodukts unter Verwendung mindestens eines DMC-Katalysators,
**dadurch gekennzeichnet, dass** als basischer Katalysator in Schritt a) Natriumhydroxid eingesetzt wird, und dass das Produkt aus Schritt b) einen Gehalt an Natriumionen von 5 bis 30 ppm aufweist.

2. Verfahren nach Anspruch 1, **dadurch gekennzeichnet, dass** als niedermolekulare Alkohole in Schritt a) Alkohole mit einer Funktionalität von 1 bis 8 eingesetzt werden.

3. Verfahren nach Anspruch 1, **dadurch gekennzeichnet, dass** die niedermolekularen Alkohole in Schritt a) ausgewählt sind aus der Gruppe, enthaltend Glycerin, Trimethylolpropan, Pentaerythrit, Di- und Tripentaerythrit, Sorbit, Saccharose, Ethylenglykol und seine Homologen, insbesondere Ethylenglykol und/oder Diethylenglykol, Propylenglykol und seine höheren Homologen, insbesondere Propylenglykol und/oder Dipropylenglykol, 1,3-Propandiol, 1,2-, 1,3-, 2,3- und 1,4-Butandiol, Pentan- und Hexandiole.

4. Verfahren nach Anspruch 1, **dadurch gekennzeichnet, dass** die Polyetheralkohole nach Schritt c) eine Hydroxylzahl im Bereich zwischen 20 und 600 mg KOH/g aufweisen.

## Claims

1. A process for preparing polyether alcohols, which comprises the steps
a) reacting a low molecular weight alcohol with alkylene oxide in the presence of a basic catalyst to form an alkylene oxide addition product having a molecular weight in the range from 200 to 900 g/mol,
b) separating the basic catalyst from the product from step a), and
c) reacting the product from step b) with further alkylene oxide in the presence of at least one DMC catalyst to form the desired end product,
wherein the basic catalyst used in step a) is sodium hydroxide and the product from step b) has a sodium ion content of from 5 to 30 ppm.

2. The process according to claim 1, wherein the low molecular weight alcohol used in step a) is an alcohol having a functionality of from 1 to 8.

3. The process according to claim 1, wherein the low molecular weight alcohol in step a) is selected from the group consisting of glycerol, trimethylolpropane, pentaerythritol, dipentaerythritol and tripentaerythritol, sorbitol, sucrose, ethylene glycol and its homologues, in particular ethylene glycol and/or diethylene glycol, propylene glycol and its higher homologues, in particular propylene glycol and/or dipropylene glycol, 1,3-propanediol, 1,2-, 1,3-, 2,3- and 1,4-butanediol, pentanediols and hexanediols.

4. The process according to claim 1, wherein the polyether alcohol after step c) has a hydroxyl number in the range from 20 to 600 mg KOH/g.

## Revendications

1. Procédé de préparation de polyéther-alcools, comprenant les étapes
a) de réaction d'un alcool de faible poids moléculaire avec un oxyde d'alkylène en présence d'un catalyseur basique pour former un produit d'addition d'oxyde d'alkylène ayant un poids moléculaire dans une gamme comprise entre 200 et 900 g/mole,
b) d'isolement du catalyseur basique à partir du produit de l'étape a),
c) de réaction du produit de l'étape b) avec de l'oxyde d'alkylène supplémentaire pour préparer le produit final souhaité, avec utilisation d'au moins un catalyseur DMC,
**caractérisé en ce que**, comme catalyseur basique dans l'étape a), on met en oeuvre de l'hydroxyde de sodium et **en ce que** le produit de l'étape b) présente une teneur en ions sodium de 5 à 30 ppm.

2. Procédé suivant la revendication 1, **caractérisé en ce que**, comme alcools de faible poids moléculaire dans l'étape a), on met en oeuvre des alcools présentant une fonctionnalité de 1 à 8.

3. Procédé suivant la revendication 1, **caractérisé en ce que** les alcools de faible poids moléculaire de l'étape a) sont choisis parmi le groupe comprenant de la glycérine, du triméthylolpropane, de la pentaérythrite, de la dipentaérythrite et de la tripentaérythrite, de la sorbite, du saccharose, de l'éthylèneglycol et ses homologues, en particulier de l'éthylèneglycol et/ou du diéthylèneglycol, du propylèneglycol et ses homologues supérieurs, en particulier du propylèneglycol et/ou du dipropylèneglycol, du 1,3-propanediol, du 1,2-, 1,3-, 2,3- et 1,4-butanediol, des pentanediols et des hexanediols.

4. Procédé suivant la revendication 1, **caractérisé en ce que** les polyéther-alcools suivant l'étape c) présentent un indice d'hydroxyle dans la gamme comprise entre 20 et 600 mg de KOH/g.
